# EUROPEAN PATENT APPLICATION

(11) **EP 2 445 206 A1**
(43) Date of publication of application: **25.04.2012**
(21) Application number: 09845969.6
(22) Date of filing: 19.06.2009
(51) Int. Cl.: H04N 5/765

(54) **TELEVISION AND SIGNAL SOURCE DISPLAYING METHOD THEREOF**

(71) Applicant: Shenzhen TCL New Technology Co., LTD, Nanshan District Shenzhen Guangdong 518067 (CN)
(72) Inventor: FU, Yaoyuan, Shenzhen Guangdong 518067 (CN); WANG, Tongjun, Shenzhen Guangdong 518067 (CN); CHEN, Yihua, Shenzhen Guangdong 518067 (CN)
(74) Representative: Manitz, Finsterwald & Partner GbR
(86) International application number: PCT/CN2009/000679
(87) International publication number: WO 2010/145055

(57) **Abstract**

A displaying method of information sources of a television, includes the following steps: in a first step, detecting whether signals are respectively inputted to information source inputting interfaces of the television or not; in a second step, executing and displaying reference indicators corresponding to the information source inputting interfaces respectively, for the information source inputting interfaces without the signals being inputted thereto; and generating OSD images corresponding to the peripheral devices connected to the information source inputting interfaces respectively based on the inputted signals, for the information source inputting interfaces with the signals being inputted thereto. With the present invention, users can judge which peripheral device the signal is inputted to and which peripheral device is available for being accessed to base on the reference indicators and the OSD image shown in the display of the television, which is convenient and humanized.

## Description

### BACKGROUND

### 1. Technical Field

The present invention relates to television technologies, and particularly, to a television and a displaying method for information source thereof.

### 2. Description of Related Art

With various kinds of electronic products, the television now is not only required to receive television signals for playing programs, but also is required to receive various kinds of audio/video signals for playing audio/video programs. Thus, a lot of information source interfaces are defined in the television in recent years for connecting the television to various peripheral devices as the information sources. For example, the television includes a number of audio and video (AV) interfaces, composite video inputting interfaces, universal serial bus (USB) inputting interfaces, high definition multimedia interfaces (HDVI) signal inputting interfaces, digital visual interfaces (DVI) signal inputting interfaces, Y/Cr/Cb outputting interfaces, and RGB signal inputting interfaces, etc.

Accompanied with the development of the television, some new problems have arisen. For example, when users want to switch from one peripheral device to another peripheral device, they often need to switch the peripheral with a special selecting interface. Additionally, with the selecting interface of a conventional television, only names of the information source inputting interfaces are displayed, whereas, the names of the peripheral devices which are connected to the information source inputting interfaces respectively cannot be displayed in the selecting interface, So users cannot figure out which information source has been connected to the corresponding inputting interface and whether a signal has been inputted to the corresponding inputting interface. Therefore, it is inconvenient for users to select or switch the corresponding information source.

### SUMMARY

One object of the present invention is to provide a displaying method for information source of a television. The displaying method includes the following steps:
in a first step, detecting whether signals are respectively inputted to information source inputting interfaces of the television or not;
in a second step, if there are no signals being inputted to information source inputting interfaces, the reference indicators corresponding to the information source inputting interfaces respectively will be executed and displayed; and if there are the signals inputted to the information source inputting interfaces, OSD images corresponding to the peripheral devices connected to the information source inputting interfaces will be generated and displayed on the TV screen.

Preferably, the displaying method further includes the following step before the first step:
connecting the peripheral devices to the television via the information source inputting interfaces respectively.

Preferably, the second step includes:
if there are no signals inputted to information source inputting interfaces, executing the reference indicators corresponding to the information source inputting interfaces, and displaying the reference indicators in the display in an on-screen display way;
if there are signals being inputted to the information source inputting interfaces, obtaining a signal a frame from the inputted signals, generating the OSD image based on the obtaining signal of the frame, and displaying the OSD image on the display.

Preferably, each reference indicator comprises an icon representing the corresponding peripheral device or a name of the corresponding peripheral device written in Chinese or English.

Preferably, the displaying method further includes:
receiving a control command from a user to select one of the OSD images, selecting and activating the information source inputting interface corresponding to the selected OSD image.

The present invention further provides a television, including: at least two information source inputting interfaces connected to at least two peripheral devices of the television respectively; a micro control unit; a detecting unit for detecting whether signals are inputted to the at least two information source inputting interfaces respectively or not under the control of the micro control unit, and further transmitting a detecting result to the micro control unit; an audio and video processing unit; and an OSD generating unit for executing reference indicators of the peripheral devices connected to the information source inputting interfaces without the signals being respectively inputted thereto, generating OSD images of the peripheral devices connected to the information source inputting interfaces with the signals being respectively inputted thereto, and further outputting the reference indicators and the OSD images to audio and video processing unit the under the control of the micro control unit. The micro control unit being used for controlling the detecting unit to detect whether the signals are inputted to the information source inputting interfaces respectively, controlling the OSD generating unit to generate the reference indicator based on the detecting result, controlling the OSD generating unit to generate the picture data and thus the OSD image based on the picture data, controlling the switching unit to select the one information source inputting interfaces, and controlling the AV processing unit to display the reference indicator or the OSD image in an information source selecting interface of the television.

Preferably, the television further includes a storage device connected to the OSD generating unit for storing the reference indicators, and the OSD generating unit executes the reference indicators from the storage device under the control of the micro control unit.

Preferably, the micro control unit further controls the detecting unit to periodically detect whether the signals are inputted to the information source inputting interfaces respectively.

Preferably, the television further includes an information source switching unit for selecting and activating one of the information source inputting interfaces with the signals inputted thereto periodically, the audio and video processing unit is further used for obtaining picture data of a frame from the signal inputted to the selected information source inputting interfaces and transmitting the data to the storage device, and the OSD generating unit is further used for generating the OSD image based on the data of the frame.

Preferably, each reference indicator includes an icon representing the corresponding peripheral device or a name of the corresponding peripheral device written in Chinese or English.

With the present invention, the information source inputting interfaces of the television are detected to determine whether the signals are respectively inputted thereto. If there are no signals being inputted to information source inputting interfaces, the reference indicators corresponding to the information source inputting interfaces respectively will be executed and displayed; and if there are the signals inputted to the information source inputting interfaces, OSD images corresponding to the peripheral devices connected to the information source inputting interfaces will be generated and displayed on the TV screen. Therefore, users are capable of determining which the peripheral device is inputted by using the OSD image corresponding the available information source to access to. Similarly, users can determine that the peripheral devices to which the reference indicators respectively correspond are not available information sources to access to. This is convenient and humanized.

### DISCRIPTION OF THE DRAWINGS

Many aspects of the embodiments can be better understood with reference to the following drawings. The components in the drawings are not necessarily dawns to scale, the emphasis instead being placed upon clearly illustrating the principles of the embodiments. Moreover, in the drawings, like reference numerals designate corresponding parts throughout the several views.
FIG 1 is a block diagram of a television in accordance with an embodiment of the present invention.
FIG 2 is a schematic view showing an icon of a peripheral device of the television of FIG 1.
FIG 3 is a flow chart of a displaying method of an information source of the television of FIG 1.

### DETAILED DESCRIPTION

The disclosure is illustrated by way of example and not by way of limitation in the figures of the accompanying drawings in which like references indicate similar elements. It should be noted that references to "an" or "one" embodiment is this disclosure are not necessarily to the same embodiment, and such references mean at least one.

In an embodiment of the present invention, information source inputting interfaces of a television are detected to determine whether signals are respectively inputted thereto. If there are no signals being inputted to the information source inputting interfaces, reference indicators corresponding to the information source inputting interfaces respectively will be executed and displayed; and if there are the signals inputted to the information source inputting interfaces, OSD images corresponding to the peripheral devices connected to the information source inputting interfaces will be generated and displayed on a TV screen.

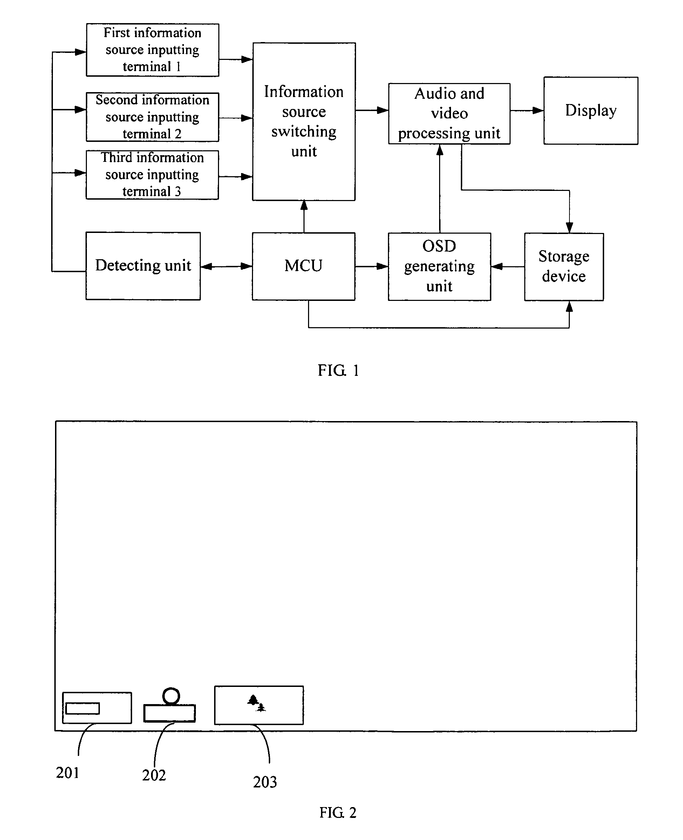

Referring to FIG. 1, a television in an embodiment includes a first information source inputting interface (first inputting interface) 1, a second information source inputting interface (second inputting interface) 2, a third information inputting interface (third inputting interface) 3, an information source switching unit (switching unit), a detecting unit, a micro control unit (MCU), an on-screen display (OSD) generating unit, an audio/video (AV) processing unit, a storage device, and a display. In other embodiments, the television may include more than three information source inputting interfaces.

The first, second, and third inputting interfaces 1, 2, and 3 can be respectively connected to three peripheral devices of the television for receiving signals outputted from the peripheral devices respectively.

The detecting unit is connected to the three inputting interfaces 1,2, and 3, and the MCU for detecting whether the signals are inputted to the three terminals 1, 2, and 3 respectively in response to a control command from the MCU, and further for transmitting the detecting result to MCU.

The switching unit is connected to the three inputting interfaces 1, 2, and 3, the AV processing unit, and the MCU for selecting one of the inputting interfaces to which the signal has been inputted in response to a command from the MCU and allowing the transmission of the signal of the selected inputting interface to the AV processing unit.

The OSD generating unit is connected to the MCU and the AV processing unit. The OSD is capable of executing at least one reference indicator of at least one inputting interfaces without the signal inputted thereto from the storage device, and outputting the reference indicators to the AV processing unit under the control of the MCU.

The AV processing unit is connected to the OSD generating unit, the storage device, and the display. The AV processing unit is used for processing the at least one reference indicator outputted from the OSD generating unit, and further transmitting the processed reference indicator to the display to allow the processed reference indicator to be displayed. The AV processing unit is further used for receiving the signal of the selected inputting interface outputted from the switching unit, obtaining picture data of a frame from the signal of the selected inputting interface, and further transmitting the picture data to the storage device.

The OSD generating unit is further capable of reading the picture data from the storage device for generating an OSD image corresponding to the selected inputting interface, and transmitting the OSD image to the AV processing unit to allow the OSD image to be processed by the AV processing unit. Thus, the OSD image can be displayed.

The MCU controls the operation of the television. The MCU is capable of controlling the detecting unit to detect whether the signals are inputted to the inputting interfaces respectively, controlling the OSD generating unit to generate the at least one reference indicator based on the detecting result. The MCU is further capable of controlling the OSD generating unit to generate the picture data and thus the OSD image based on the picture data. Additionally, the MCU is capable of controlling the switching unit to select the one inputting interfaces with the signal being inputted thereto and controlling the AV processing unit to display the at least one reference indicator or the OSD image in an information source selecting interface of the television.

The display is used for displaying the information source selecting interface, the at least one reference indicator, and the OSD image.

In operation, each peripheral device is connected to the corresponding inputting interface at first. In some embodiments, a reference name can be labeled near each inputting interface for indicating the corresponding peripheral device which can be connected to the inputting interface, for example, a reference name "STB" is labeled near the first inputting interface 1 as an indication that a set-top box can be connected to the first inputting interface 1, a reference name "DVD" is labeled near the second inputting interface 2 as an indication that a DVD player can be connected to the second inputting interface 2, and a reference name "camera" is labeled as an indication that a camera can be connected to the third inputting interface 3. In this way, users can connect each peripheral device to the corresponding inputting interface easily.

The detecting unit periodically detects whether the signals are inputted to the three inputting interfaces 1, 2, and 3 respectively under the control of the MCU.

Before connecting the peripheral devices to the television, the reference indicators of the peripheral devices which can be connected to the three inputting interfaces are respectively stored in the storage device. The reference indicators in the embodiment includes a set-top box reference indicator corresponding to the first inputting interface 1, a DVD player reference indicator corresponding to the second inputting interface 2, and a camera reference indicator corresponding to the third inputting interface 3.

After all the peripheral devices are connected to the inputting interfaces respectively, one of the peripheral devices can be powered on to allow the transmission of the signal form the powered on peripheral device to the corresponding inputting interface. At this time, no signal is transmitted between one of the other peripheral devices which are not powered on and the corresponding inputting interfaces. For example, after the set-top box, the DVD player, and the camera are respectively connected to the three inputting interfaces 1, 2, and 3, the camera is powered on while the set-top box and the DVD are not powered on. Thus, the third inputting interface 3 is capable of receiving the signal outputted from the camera, and the first and second interface 1, 2 receive no signals from the set-top box and the DVD respectively. At the same time, the detecting unit begins to detect whether signals are inputted to the inputting interfaces respectively and figure out the corresponding inputting terminal with the signal being inputted thereto. That is, the detecting unit begins to detect which peripheral device is powered on. In the embodiment, the detecting unit determines that the signal is inputted to the third inputting interface 3 and no signals are inputted to the first and second inputting interfaces 1, 2 respectively. The detecting unit then outputs the detecting result to the MCU.

According to the detecting result, to the inputting interfaces without signals being inputted thereto, MCU controls the OSD generating unit to execute the reference indicators of the peripheral devices respectively connected to the inputting interfaces from the storage device. In the embodiment, since the set-top box connected to the first inputting interface 1 and the DVD player connected to the inputting interface 2 are not powered on, and no signals are inputted to the first and second inputting interfaces 1, 2 respectively, therefore, the OSD generating unit executes the set-top box reference indicator and the DVD player reference indicator from the storage device. The OSD generating unit then outputs the set-top box reference indicator and the DVD player reference indicator to the AV processing unit to allow the two reference indicators to be processed by the AV processing unit. The AV processing unit then outputs the processed reference indicators to the display. In this way, the reference indicators of the set-top box and the DVD player are displayed as the numbers 201, 202 in the information source selecting interface in FIG. 2.

To the inputting interface with the signal inputted thereto such as the third inputting interface 3 in the embodiment, in a field blanking time period of a current video signal, the MCU controls the switching unit to output the signal received by the third inputting interface 3 to the AV processing unit. The MCU further controls the AV processing unit to obtain the picture data from the signal received by the third inputting interface 3 and stores the picture data in the storage device. In this way, the OSD generating unit is capable of reading the picture data and thus generating the OSD image based on the picture data. The AV processing unit then processes the OSD image to allow the OSD image to be displayed as the number 203 in the information source selecting interface shown in FIG. 2.

With the television of the present invention, users can figure out the corresponding information sources which do not receive the signals according to the reference indicators and can determine that these information sources are unavailable. Similarly, users can figure out the corresponding information sources which receives the signal according to the OSD images and determine that the information source is available to access to.

It is noted that in operation, users can push an "information source" button on a controller of the television to execute or close the information source selecting interface to show or hide the reference indicators and the OSD image. Since in initial state, the reference indicators and the OSD image are shown, users can push the "information source" button to hide them.

It is noted that in other embodiments, each reference indicator may be an icon representing the corresponding peripheral device.

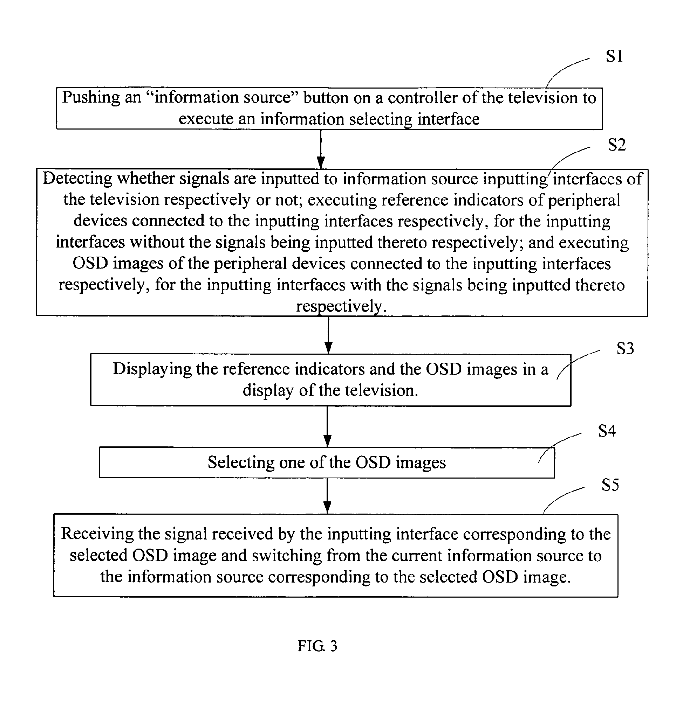

Referring to FIG. 3, a displaying method for information sources of the television is provided. The displaying method includes the following steps:
In step S1, pushing an "information source" button on a controller of the television to execute an information selecting interface;
In step S2, detecting whether signals are inputted to information source inputting interfaces of the television respectively or not;, executing reference indicators of peripheral devices connected to the inputting interfaces respectively, for the inputting interfaces without signals being inputted thereto respectively;, executing OSD images of the peripheral devices connected to the inputting interfaces respectively based on the signal, for the inputting interfaces with the signals being inputted thereto respectively.
In step S3, displaying the reference indicators and the OSD images in a display of the television.
In step S4, selecting one of the OSD images;
In step S5, receiving the signal received by the inputting interface corresponding to the selected OSD image and switching from the current information source to the information source corresponding to the selected OSD image.

Even though information and the advantages of the present embodiments have been set forth in the foregoing description, together with details of the mechanisms and functions of the present embodiments, the disclosure is illustrative only; and that changes may be made in detail, especially in matters of shape, size, and arrangement of parts within the principles of the present embodiments to the full extend indicated by the broad general meaning of the terms in which the appended claims are expressed.

## Claims

1. A displaying method for information sources of a television, comprising the following steps:
in a first step, detecting whether signals are respectively inputted to information source inputting interfaces of the television or not;
in a second step, executing and displaying reference indicators corresponding to the information source inputting interfaces respectively, for the information source inputting interfaces without the signals being inputted thereto; and generating OSD images corresponding to the peripheral devices connected to the information source inputting interfaces respectively based on the inputted signals, for the information source inputting interfaces with the signals being inputted thereto.

2. The displaying method as claimed in claim 1 further comprises the following step before the first step:
connecting the peripheral devices to the television via the information source inputting interfaces respectively.

3. The displaying method as claimed in claim 1, wherein the second step comprises:
executing the reference indicators of the peripheral devices corresponding to the information source inputting interfaces, for the information source inputting interfaces without the signals being respectively inputted thereto, and displaying the reference indicators in the display in an on-screen display way;
obtaining a signal a frame from the inputted signals, generating the OSD image based on the obtaining signal of the frame, for the information source inputting interfaces with the signals being inputted thereto, and displaying the OSD image on the display.

4. The displaying method as claimed in claim 1, wherein each reference indicator comprises an icon representing the corresponding peripheral device or a name of the corresponding peripheral device written in Chinese or English.

5. The displaying method as claimed in claim 1 further comprises:
receiving a control command from a user to select one of the OSD images, selecting and activating the information source inputting interface corresponding to the selected OSD image.

6. A television, comprising:
at least two information source inputting interfaces connected to at least two peripheral devices of the television respectively;
a micro control unit;
a detecting unit for detecting whether signals are inputted to the at least two information source inputting interfaces respectively or not under the control of the micro control unit, and further transmitting a detecting result to the micro control unit;
an audio and video processing unit; and
an OSD generating unit for executing reference indicators of the peripheral devices connected to the information source inputting interfaces without the signals being respectively inputted thereto, generating OSD images of the peripheral devices connected to the information source inputting interfaces with the signals being respectively inputted thereto, and further outputting the reference indicators and the OSD images to audio and video processing unit the under the control of the micro control unit;
the micro control unit being used for controlling the detecting unit to detect whether the signals are inputted to the information source inputting interfaces respectively, controlling the OSD generating unit to generate the reference indicator based on the detecting result, controlling the OSD generating unit to generate the picture data and thus the OSD image based on the picture data, controlling the switching unit to select the one information source inputting interfaces, and controlling the AV processing unit to display the reference indicator or the OSD image in an information source selecting interface of the television.

7. The television as claimed in claim 6 further comprises a storage device connected to the OSD generating unit for storing the reference indicators, and the OSD generating unit executes the reference indicators from the storage device under the control of the micro control unit.

8. The television as claimed in claim 6, wherein the micro control unit further controls the detecting unit to periodically detect whether the signals are inputted to the information source inputting interfaces respectively.

9. The television as claimed in claim 6, wherein the television further comprises an information source switching unit for selecting and activating one of the information source inputting interfaces with the signals inputted thereto periodically, the audio and video processing unit is further used for obtaining picture data of a frame from the signal inputted to the selected information source inputting interfaces and transmitting the data to the storage device, and the OSD generating unit is further used for generating the OSD image based on the data of the frame.

10. The television as claimed in claim 6, wherein each reference indicator comprises a name of the corresponding peripheral device written in Chinese or English.
